Europäisches Patentamt

European Patent Office

Office européen des brevets

(19)

(11)  **EP 1 314 997 B1**

(12)  **EUROPEAN PATENT SPECIFICATION**

(45) Date of publication and mention
of the grant of the patent:
**12.01.2005  Bulletin 2005/02**

(51) Int Cl.7: **G01S 13/26**, G01S 13/524

(21) Application number: **01127990.8**

(22) Date of filing: **24.11.2001**

(54) **Method for HPRF-radar measurement**

Verfahren zur Messung mittels einer HPRF-Radaranlage

Procédé de mesure par radar HPRF

(84) Designated Contracting States:
**DE FR GB IT SE**

(43) Date of publication of application:
**28.05.2003  Bulletin 2003/22**

(73) Proprietor: **EADS Deutschland GmbH
81663 München (DE)**

(72) Inventors:
• **Rohling, Prof. Dr. Dr.
38304 Wolfenbüttel (DE)**
• **Grüner, Wilhelm, Dr.
89075 Ulm (DE)**

• **Hommel, Hans
88255 Baint (DE)**
• **Nagel, Dieter
89155 Erbach (DE)**

(74) Representative: **Meel, Thomas
Patentassessor,
c/o Dornier GmbH
L H G
88039 Friedrichshafen (DE)**

(56) References cited:
**EP-A- 0 780 974        EP-A- 0 919 834
US-A- 4 028 699        US-A- 4 328 495
US-A- 5 796 364        US-B1- 6 225 943**

EP 1 314 997 B1

## Description

The invention relates to a method for the HPRF-radar measurement of target range and Doppler frequency, in particular for use in an airborne radar system (HPRF: High Pulse Repetition Frequency).

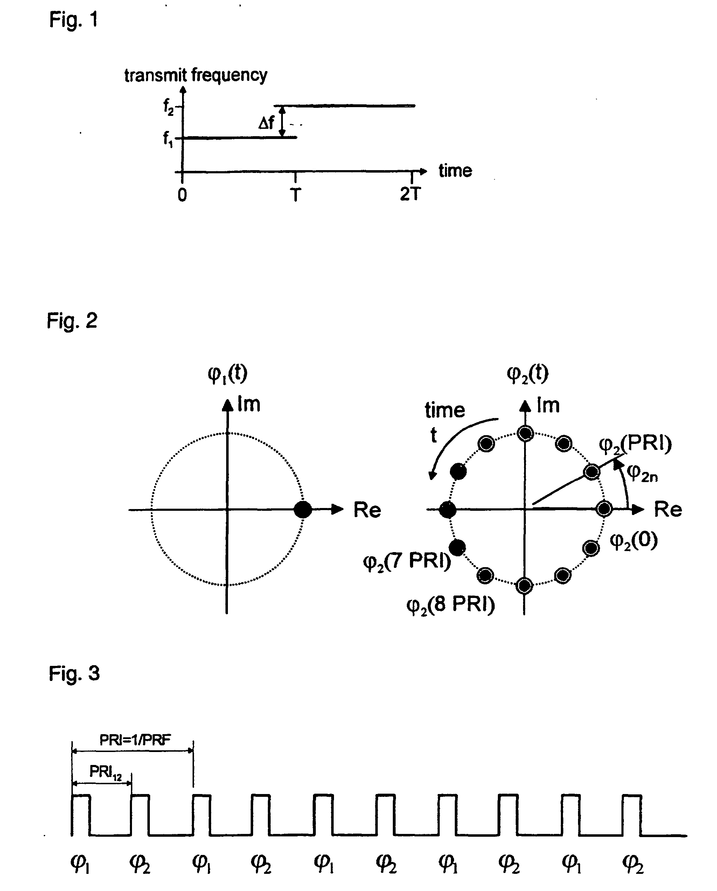

A radar waveform with two slightly different transmit frequencies is well known and often described in the literature as frequency shift keying (FSK) technique. Using such a technique target range and velocity can be measured unambiguously even in multi target situations. Fig. 1 shows the two carrier frequencies $f_1$ and $f_2$ in dependence on time. Each frequency represented by a vertical line corresponds to a coherent processing interval (CPI) and include a pulse sequence of N=2048 pulses each.

In each CPI of length $T$ the received pulsed signal is directly down converted with the individual instantaneous transmit frequency and shows as a single information the Doppler frequencies of the observed targets. The two base band signals are Fourier transformed, target detection and Doppler frequency estimation are processed further on. A single target will be observed in two adjacent CPI's on the same Doppler bin but with different phase information. For a simultaneous range measurement, these two phases $\phi_1, \phi_2$ on the same Doppler bin are considered and the phase difference $\Delta\phi = \phi_2 - \phi_1$ is calculated which is directly related to the target range $R$ in accordance with the following equation:

$$\Delta\phi = 2\pi \cdot \Delta f \cdot \frac{2R}{c}. \qquad (1)$$

The range measurement is unambiguous if $\Delta\phi < 2\pi$. In order to measure target ranges up to $R_{max} = 150$ km, the frequency shift in the FSK wave form must be:

$$\Delta f \leq \frac{c}{2R} = 1\text{kHz}.$$

This basic idea is so far applicable if the assumptions of a pure stationary observation are fulfilled. But each target manoeuvre inside the measurement time $2T$ will have a large influence to the phase measurement in the adjacent CPI's and will lead to large range errors in the range estimation procedure in accordance with Eq. 1.

The object of the present invention is to propose a method for simultaneously and unambiguously measure target range and target Doppler frequency for highly agile targets and even in multiple target situations.

This object is attained by means of the method recited in the patent claim.

According to the present invention the transmit oscillator generates a single unmodulated frequency. The HPRF pulse sequence is split into two intertwined parts. The two pulse sequences are distinguished and modulated with a digital phase shift keying (PSK) modulation scheme:

- the pulses of the first pulse sequence have the same phase state or alternatively have a linear increasing phase value with a fixed phase difference $\varphi_{1n}$ from pulse to pulse

- the pulses of the second pulse sequence have a linear increasing phase value with a fixed phase difference $\varphi_{2n}$ from pulse to pulse with $\varphi_{1n} \neq \varphi_{2n}$ and $\varphi_{1n} > 0$.

This step is important because the down conversion process is simple in this case, the PSK technique guarantees the unambiguous range measurement and the intertwined pulse sequences make the measurement robust against target manoeuvre. Before this background all important requirements can be fulfilled with the PSK waveform according to the invention.

The invention will be explained in detail below by means of an exemplary embodiment and with reference to the attached drawings.

## Brief Description of the Drawings

Fig. 1: Transmit frequency for FSK-radar in dependence on time;

Fig. 2: Constellation diagram to show the phase steps from pulse to pulse for the transmit signal according to the invention;

Fig. 3 Transmit waveform according to the invention showing the corresponding pulses to the phase steps of Fig. 2;

Fig. 4 Radar transmit/receive system for carrying out the method according the invention;

Fig. 5    Constellation diagram of the transmit and receive signal (base band domain) according to the invention;

Fig. 6    Frequency spectra of the received base band signals containing three targets;

Fig. 7    Sampling scheme for signal processing of the received base band signal, wherein $m_{1,c}(t)$, $m_{2,c}(t)$ are the sampling sequences for demultiplexing.

The digital PSK waveform can be described easily by the constellation diagram of the phase states on the different pulses in the pulse sequence. In this preferred embodiment we distinguish between a fixed phase modulation of the first sequence in which case all pulses have the same phase state, for example zero phase for each pulse, see left side of Fig. 2. The second pulse sequence will have in this case a linear increasing phase modulation with a fixed phase difference from pulse to pulse, see right side of Fig. 2.

For this digital PSK waveform the transmit signal consists of two intertwined pulse sequences with fixed transmit frequency but with constant (first pulse sequence) and linear phase modulation technique (second pulse sequence), respectively, as shown in Fig. 3.

The phase modulation from pulse to pulse can be realised for example by using the quadratur modulation technique which is well known in the digital radio transmission technique. The amplitude envelope of the waveform is constant, so that no distortion by non linearity's of the individual amplifier must be considered. The linear phase modulation of the second pulse sequence is carried out in such a way that the phase shift from pulse to pulse is selected under the condition that in the complete pulse sequence the phase rotates exactly for example 20 times in the constellation diagram. This condition leads to a shift in the Doppler frequency domain of exactly 20 FFT bins.

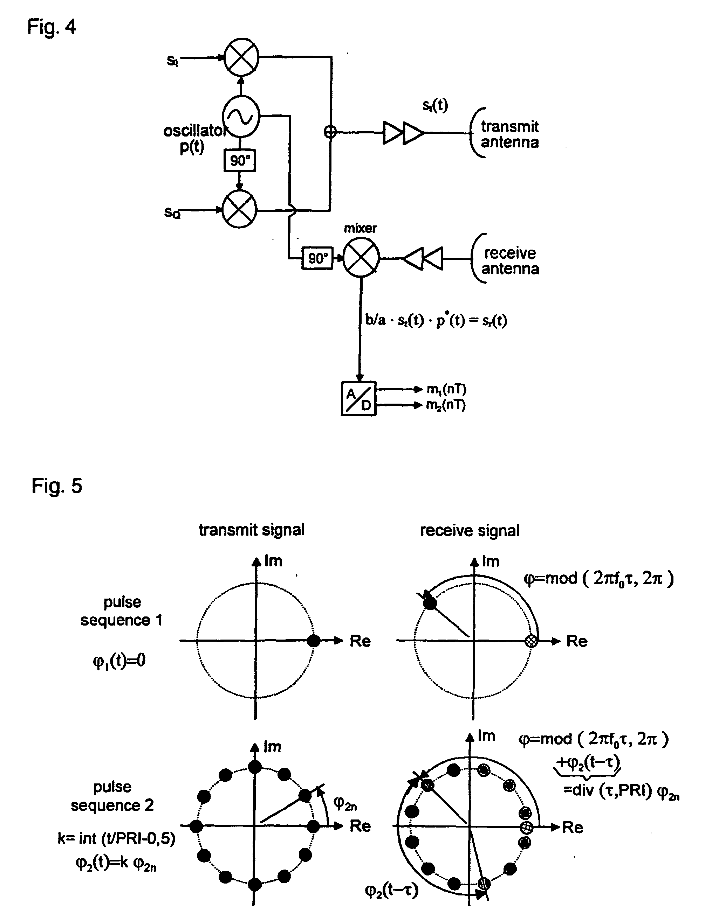

Fig. 4 shows the transmitter/receiver block diagram of the radar system on the basis of a quadratur (de) modulator.

The transmit signal $s_t(t)$ can be described analytically as follows, wherein $p(t)$ is the modulator function and $s(t)$ is the complex video signal:

$$p(t) = e^{j2\pi f_0 t}$$

$$s(t) = s_1(t) + js_Q(t) = ae^{j\varphi(t)}$$

$$s_t(t) = p(t) \cdot s(t)$$

$$s_t(t) = ae^{j(2\pi \cdot f_0 \cdot t + \varphi(t))},$$

$f_0$ transmit frequency
with:

$$\varphi(t) = \varphi_1(t) = 0 \qquad \text{for } 2n \cdot PRI_{12} \le t < (2n + 1)PRI_{12}, \text{ n Pulse number} \qquad (2)$$

$$\varphi(t) = \varphi_2(t) = \text{int}(t/PRI - 0{,}5) \cdot \varphi_{2n} \qquad \text{for } (2n + 1) \cdot PRI_{12} \le t < (2n + 2)PRI_{12} \qquad (3)$$

The received signal is down converted with the fixed instantaneous carrier frequency $f_0$ of the transmit oscillator signal $p(t)$ that is also used as the demodulator signal. The demodulator signal is then the complex conjugate of $p(t)$:

$$p^*(t) = e^{-j2\pi f_0 t}$$

The received demodulated signal $s_r(t)$ is:

$$s_r(t) = \frac{b}{a} s_t(t) * p^*(t) = be^{j(2\pi \cdot f_0 \cdot t + \varphi(t))} * e^{-j2\pi f_0 t}$$

$$= be^{j\varphi(t)}$$

$$= b\cos\varphi(t) + jb\sin\varphi(t)$$

wherein for $\varphi(t)$ the above mentioned Eq's 2 and 3 still apply and b refers to the considerably lower amplitude of the receiving signal.

The advantage of the wave form according to the invention is that the phase constellation diagram of the receive signal is only shifted compared with the transmit signal due to the time delay $\tau$ or the target range R respectively. This is shown in Fig. 5.

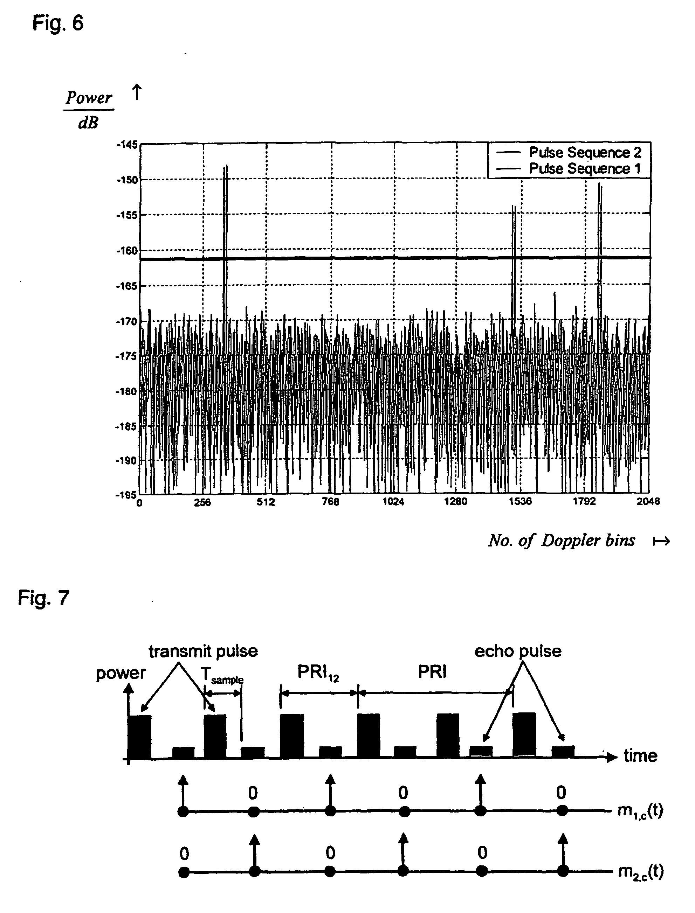

The demodulated signal is A/D converted (Fig. 4). The received base band signal is split into the two signal sequences $m_1$, $m_2$ (Fig. 4) corresponding to first and second transmit pulse sequence. The received base band signal $m_1$, $m_2$ of each individual pulse sequence is Fourier transformed. Each spectral line is represented by a complex value in amplitude and phase. The Doppler frequency shift is estimated after target detection. Due to the linear phase modulation in the second pulse sequence a single target will be observed after Fourier transformation with the same Doppler frequency but with an additional frequency shift of $\Delta f$ (20 FFT bins in the considered example). An example representing a 3 target situation is shown in Fig. 6 which contains the frequency spectra of the received base band signals of first (dark grey) and second (light grey) pulse sequence. As can be easily seen from that drawing, for each target there exists a pair of spectral lines (one from the spectrum of the first pulse sequence and one from the spectrum of the second pulse sequence) with a certain frequency shift $\Delta f$.

In order to measure target range and speed simultaneously, the following signal processing steps will be performed:

- calculate Fourier transformation of both receive signals
- search the maximum amplitude peaks in both spectra
- cluster the maxima of both spectra which have a frequency shift of $\Delta f$ (Doppler bin pair)
- calculate Doppler frequency (or target speed) for each Doppler bin pair
- calculate phase difference for each Doppler bin pair and calculate target range.

These steps will now be described in detail based on a preferred embodiment of the invention.

Transmit signal $s_t(t)$ generation and the mixing process is well known and need no further explanation. The received demodulated signal $s_r(t)$ is roughly speaking a time shifted version of $s_t(t)$. The receive signal $s_r(t)$ is sampled with $f_a$ = 4MHz sampling frequency which leads to a range gate width of $RGW$ = 37,5m. The total sampling process of the base band signal is depicted in Fig. 7.

The receive sampled sequence inside a single range gate is considered. The sample values have a time distance of $PRF_{12}$. This signal sequence is split into two different intertwined sequences filled with zeros as shown in Fig. 7. The described signal processing in Fig. 7 is for demultiplexing the two received intertwined pulse sequences $m_1(t)$ and $m_2(t)$, where it is not known if the sequence $m_1(t)$ contains the echo signal of the transmit sequence with constant phase states and $m_2(t)$ the echo signal of the transmit sequence with linear phase modulation or vice versa.

For this reason we distinguish the base band signal for each range gate into these two cases. Eq. 4 describes the first and Eq. 5 the second situation.

$$m_1(t) = \begin{cases} b \cdot \exp\left( j \cdot \left[ 2\pi \cdot f_{dop} \cdot t + \underbrace{\varphi_1(t-\tau)}_{=0} - 2\pi \cdot f_0 \cdot \tau \right] \right), & 2n \cdot \leq t / PRI_{12} < 2n+1 \\ 0, & 2n+1 \cdot \leq t / PRI_{12} < 2n+2 \end{cases}$$

$$m_2(t) = \begin{cases} b \cdot \exp\left( j \cdot \left[ \underbrace{2\pi \cdot f_{dop} \cdot t + \varphi_2(t-\tau)}_{=2\pi \left( f_{dop} + \Delta f \right) t + div(\tau, PRI)} - 2\pi \cdot f_0 \cdot \tau \right] \right), & 2n+1 \cdot \leq t / PRI_{12} < 2n+2 \\ 0, & 2n \cdot \leq t / PRI_{12} < 2n+1 \end{cases} \tag{4}$$

The amplitude b of the target echo signal is calculated in accordance to the radar cross section (RCS) and in accordance to the radar equation.

$$m_1(t) = \begin{cases} b \cdot \exp\left( j \cdot \left[ \underbrace{2\pi \cdot f_{dop} \cdot t + \varphi_2(t-\tau)}_{=2\pi(f_{dop}+\Delta f)t + div(\tau, PRI)} - 2\pi \cdot f_0 \cdot \tau \right] \right), & 2n \leq t/PRI_{12} < 2n+1 \\ 0, & 2n+1 \leq t/PRI_{12} < 2n+2 \end{cases}$$

$$m_2(t) = \begin{cases} b \cdot \exp\left( j \cdot \left[ 2\pi \cdot f_{dop} \cdot t + \underbrace{\varphi_1(t-\tau)}_{=0} - 2\pi \cdot f_0 \cdot \tau \right] \right), & 2n+1 \leq t/PRI_{12} < 2n+2 \\ 0, & 2n \leq t/PRI_{12} < 2n+1 \end{cases}$$

$$(5)$$

Inside each individual range gate the two received and demultiplexed sequences $m_1(t)$ and $m_2(t)$ are first weighted using e.g. a Blackmann or a Hanning window, denoted as *w(n)* and Fourier transformed by an FFT. The resulting Doppler frequency spectra are denoted by $M_1(t)$ and $M_2(t)$.

$$M_1(f, rangegate) = \text{FFT}(m_1(nT, rangegate) \cdot w(n))$$

$$M_2(f, rangegate) = \text{FFT}(m_2(nT, rangegate) \cdot w(n)).$$

For each range gate spectrum $M_1(f)$ a threshold is calculated, using a CA-CFAR algorithm (CA-CFAR: cell averaging-constant false alarm rate) that is well known to a person skilled in the art (e.g. DE 196 00 779 A1). The Doppler frequency of the *k-th* detected target is denoted by $f_{1,k}$ (number of FFT bin), the measured phase information on this FFT bin by $\phi_{1,k}$ and the range gate number by $rg_k$. These information is needed for further processing.

For all detected target amplitude peaks of $M_1(f)$ there are existing corresponding frequency peaks in the same range gates but in the spectrum $M_2(f)$. These frequencies are shifted due to the linear phase modulation by 20 FFT bins in the considered examples. The absolute frequency shift is given by:

$$\Delta f = \frac{\varphi_{2n} - \overbrace{\varphi_{1n}}^{=0}}{2\pi} \cdot PRF$$

We introduce a binary factor $m_{pos}$ that describes the two situations, in which $m_1(t)$ contains the echo signal of the constant phase modulation and $m_2(t)$ the echo signal of the linear phase modulation ($m_{pos} = 1$) or vice versa ($m_{pos} = -1$).

Frequency peaks in both spectra $M_1(f)$ and $M_2(f)$ for the same range gate are correlated, if the detected frequency peaks are around 20 FFT bins apart. This situation can be described analytically by the following equation.

$$\frac{f_{2,k,rg} - f_{1,k,rg}}{\Delta f} = m_{pos,k} \in \{-1, 1\}$$

In case of a frequency *pair* $f_{1,k,rg}$, $f_{2,k,rg}$ and the related *phases* $\phi_{1,k}, \phi_{2,k}$ target speed and range can be measured unambiguously and simultaneously even in multi target situations by the following simple equations.
The target Doppler frequency can be calculated by the measured frequencies under the knowledge which receive pulse sequence contains the zero phase stages ($m_{pos} = 1$, or $m_{pos} = -1$)

$$f_{dop,k,rg} = \begin{cases} f_{1,k,rg} & | \ m_{pos,k} = 1 \\ f_{2,k,rg} & | \ m_{pos,k} = -1 \end{cases}$$

The radial velocity of the detected target is in this case:

$$v_{k,rg} = \frac{-f_{dop,k,rg}}{2} \frac{c}{f_0}$$

The target range $R$ can now be calculated simply by the phase difference directly and the given range gate information:

$$\Delta\phi_k = \phi_{2,k} - \phi_{1,k}$$

The target range ambiguity factor $tr_{amb}$, which has an integer value, can be calculated by:

$$tr_{amb,k} = \mathrm{int}\left(\frac{\Delta\phi_k}{\varphi_{2n} - \varphi_{1n}}\right) = \mathrm{int}\left(\frac{\Delta\phi_k}{\varphi_{2n}}\right)$$

Using the target range ambiguity factor and the range gate information, the unambiguous target range is given by:

$$R_k = \begin{cases} (rg - 0.5)\cdot RGW + tr_{amb,k} \cdot R_{amb} & | \ m_{pos,k} = 1 \\ (rg - 0.5)\cdot RGW + (tr_{amb,k} - 0.5)\cdot R_{amb} & | \ m_{pos,k} = -1 \end{cases}$$

with $rg$ number of range gate, where the target has been detected
$RGW$ width of range gate
$R_{amb}$ unambiguous range measurement interval given by $PRI$

**System Parameters**

The table below shows typical system parameters for an airborne radar system in which the method according to the invention can be used.

| Carrier Frequency $f_T$ | 8,5 ... 10,7 GHz | FFT-Length | 2048 |
|---|---|---|---|
| Relative Velocity $v_{rel}$ | -1500 m/s ... +300 m/s | Unambiguous Range $R_{amb}$ | 1,5 km |
| Doppler Frequency Bandwidth | 90 kHz (-18 kHz ... 72 kHz) | Range Gate Width $RGW$ | 37.5 m |
| Distance Measurement Range $R$ | 0 km ... 150 km | Noise Figure $F$ | 5 |
| Antenna Gain $G$ | 32 dB | Noise Bandwidth | 4 MHz |
| Sampling Frequency $f_a$ | 4 MHz | Noise Temperature | 293 K |

(continued)

| Pulse Width $T_{PW}$ | 1/(4 MHz) = 250 ns | Transmit Power | 10 kW |
|---|---|---|---|
| Number of Pulses per Sequence (CPI) | 2048 | Target RCS | 5 m$^2$ |
| PRF | 100 kHz | $PRF_{12}$ | 200 kHz |

**Claims**

1. Method for the HPRF-radar measurement of the range and Doppler frequency of at least one target comprising the following steps:

   - generating a transmit signal which consists of two pulse sequences that are inter-twined on a pulse to pulse basis and that have the same pulse repetition frequency PRF and the same transmit frequency,

   - whereas the pulses of the first pulse sequence have a linear increasing phase value with a fixed phase difference $\varphi_{1n}$ from pulse to pulse with $\varphi_{1n} \geq 0$ and

   - whereas the pulses of the second pulse sequence have a linear increasing phase value with a fixed phase difference $\varphi_{2n}$ from pulse to pulse with $\varphi_{1n} \neq \varphi_{2n}$ and $\varphi_{1n} > 0$

   - Fourier transforming the two received base band signals of each individual pulse sequence,

   - determining the amplitude peaks of the resulting two Fourier spectra,

   - clustering the amplitude peaks of the two Fourier spectra in order to determine pairs of spectral lines of a Doppler frequency shift of $\Delta f = \dfrac{\varphi_{2n} - \varphi_{1n}}{2\pi} \cdot PRF$

   - calculating the target Doppler frequency from the two Doppler frequencies of a previously determined spectral line pair,

   - calculating the target range from the phase difference between the two spectral lines of a previously determined spectral line pair.

**Patentansprüche**

1. Verfahren zur HPRF-Radarmessung der Entfernung und der Dopplerfrequenz mindestens eines Ziels mit den folgenden Schritten:

   - Erzeugen eines Sendesignals, das aus zwei Impulssequenzen besteht, die impulsweise verflochten sind und die dieselbe Impulswiederholungsfrequenz PRF und dieselbe Sendefrequenz aufweisen,
   - wohingegen die Impulse der ersten Impulssequenz einen linearen zunehmenden Phasenwert mit einer festen Phasendifferenz $\varphi_{1n}$ von Impuls zu Impuls mit $\varphi_{1n} \geq 0$ aufweisen und
   - wohingegen die Impulse der zweiten Impulssequenz einen linearen zunehmenden Phasenwert mit einer festen Phasendifferenz $\varphi_{2n}$ von Impuls zu Impuls mit $\varphi_{1n} \neq \varphi_{2n} >$ und $\varphi_{1n} > 0$ aufweisen
   - Fourier-Transformieren der beiden empfangenen Basisbandsignale jeder einzelnen Impulssequenz,
   - Bestimmen der Amplitudenspitzen der beiden resultierenden Fourierspektren,
   - Clustern der Amplitudenspitzen der beiden Fourierspektren, um Paare von Spektrallinien einer Dopplerfrequenzverschiebung von $\Delta f = \dfrac{\varphi_{2n} - \varphi_{1n}}{2\pi} \cdot PRF$ zu bestimmen
   - Berechnen der Ziel-Dopplerfrequenz eines zuvor bestimmten Spektrallinienpaars,
   - Berechnen der Zielentfernung aus der Phasendifferenz zwischen den beiden Spektrallinien eines zuvor bestimmten Spektrallinienpaars.

**Revendications**

1. Procédé de mesure par radar HPRF de la distance et de la fréquence Doppler d'au moins une cible, comprenant les étapes suivantes :

   - génération d'un signal émis constitué de deux suites d'impulsions entrelacées, chaque impulsion avec une autre, et présentant la même fréquence de récurrence d'impulsion PRF et la même fréquence d'émission,
   - les impulsions de la première suite d'impulsions présentant une valeur de phase à croissance linéaire, avec une différence de phase fixe $\varphi_{1n}$ d'une impulsion à l'autre, où $\varphi_{1n} \geq 0$, et
   - les impulsions de la deuxième suite d'impulsions présentant une valeur de phase à croissance linéaire, avec une différence de phase fixe $\varphi_{2n}$ d'une impulsion à l'autre, où $\varphi_{1n} \pm \varphi_{2n}$ et $\varphi_{1n} > 0$,
   - transformation de Fourier des deux signaux en bande de base reçus de chaque suite d'impulsions individuelle,
   - détermination des pics d'amplitude des deux spectres de Fourier obtenus,
   - regroupement des pics d'amplitude des deux spectres de Fourier afin de déterminer des paires de raies spectrales d'un décalage Doppler de $\Delta f = \frac{\varphi_{2n} - \varphi_{1n}}{2\pi} \cdot PRF$,
   - calcul de la fréquence Doppler de la cible à partir des deux fréquences Doppler d'une paire de raies spectrales préalablement déterminées,
   - calcul de la distance de la cible à partir de la différence de phase entre les deux raies spectrales d'une paire de raies spectrales préalablement déterminées.

Fig. 1

transmit frequency

$f_2$

$\Delta f$

$f_1$

time

0    T    2T

Fig. 2

$\varphi_1(t)$

Im

Re

$\varphi_2(t)$

time
t

Im

$\varphi_2(PRI)$

$\varphi_{2n}$

Re

$\varphi_2(7\ PRI)$

$\varphi_2(8\ PRI)$

$\varphi_2(0)$

Fig. 3

PRI=1/PRF

$PRI_{12}$

$\varphi_1$  $\varphi_2$  $\varphi_1$  $\varphi_2$  $\varphi_1$  $\varphi_2$  $\varphi_1$  $\varphi_2$  $\varphi_1$  $\varphi_2$

Fig. 4

Fig. 5

## Fig. 6

*No. of Doppler bins* ↦

## Fig. 7